# EUROPEAN PATENT SPECIFICATION

(11) **EP 1 878 944 B1**
(45) Date of publication and mention of the grant of the patent: **03.09.2014**
(21) Application number: 07111909.3
(22) Date of filing: 06.07.2007
(51) Int. Cl.: F16G 13/06

(54) **Roller chain for driving**
Rollentreibkette
Chaîne de transmission à rouleaux

(30) Priority: 13.07.2006 JP 2006193257
(43) Date of publication of application: 16.01.2008
(73) Proprietor: HONDA MOTOR CO., LTD., Tokyo (JP)
(72) Inventor: Honma, Hideki c/o Honda R&D Co., Ltd., Saitama 351-0193 (JP); Maeda, Kazuhisa c/o Honda R&D Co., Ltd., Saitama 351-0193 (JP); Sasaki, Nobu c/o Honda R&D Co., Ltd., Saitama 351-0193 (JP); Ito, Mijo c/o Honda R&D Co., Ltd., Saitama 351-0193 (JP)
(74) Representative: Quinterno, Giuseppe

(56) References cited:
- EP-A- 0 834 676
- CA-A1- 2 474 570
- DE-U1- 8 700 047
- DE-U1- 29 518 412
- FR-A- 974 976
- US-A- 2 182 443
- US-A- 3 359 815

## Description

The present invention relates to roller chains for driving and more particularly to a roller chain for driving of the kind defined in the preamble of claim 1.

A roller chain of this kind is disclosed in US-2 182 443-A.

It is an object of the present invention to provide a roller chain for driving that can reduce its weight while having a sufficient strength for a load.

This object is achieved by the roller chain defined in claim 1.

According to the invention, the outer and inner link plates can be each formed as small as possible by allowing the side joined to the circular arc portion to extend almost linearly while being widthwise expanded from the circular arc portion at both ends thereof.

An embodiment of the present invention will hereinafter be described with reference to the drawings, wherein:
Fig. 1 is a front view of an inner link plate constituting part of a roller chain for driving according to an embodiment of the present invention;
Fig. 2 is a front view of an outer link plate constituting part of the roller chain according to the embodiment of the invention;
Fig. 3 is a perspective view of the roller chain according to the embodiment of the present invention;
Fig. 4 is a plan view of the roller chain according to the embodiment of the present invention;
Fig. 5 is a flowchart for a shape determination procedure for the outer link plate;
Fig. 6 illustrates density mesh data for a roller chain model as a phase optimization object;
Fig. 7 illustrates shape topology;
Fig. 8 illustrates mesh date resulting from the movement of control points by shape optimization;
Fig. 9 is a diagram illustrating Mises stress of a conventional outer plate, and
Fig. 10 is a diagram illustrating Mises stress of the outer plate determined according to the procedure of the present embodiment.

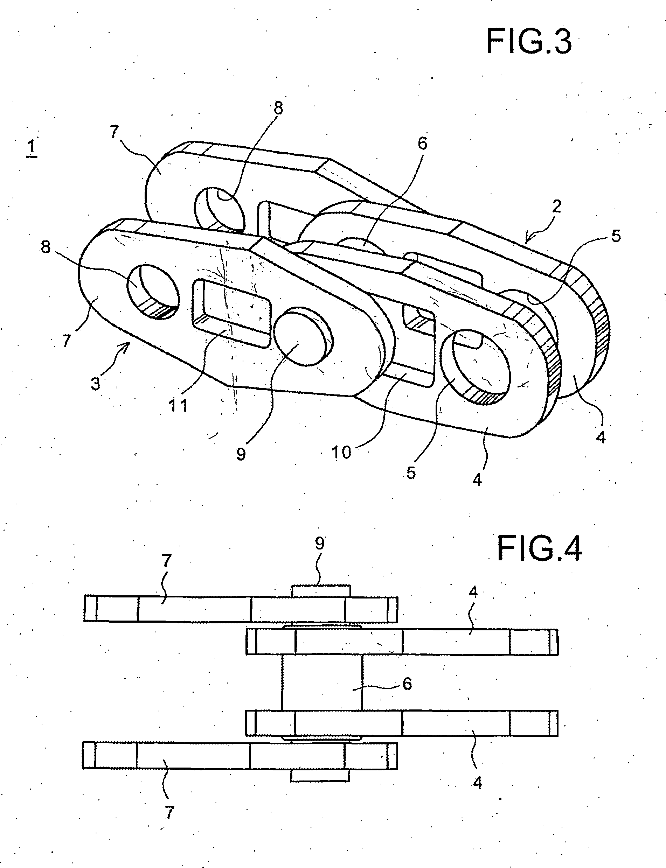

Fig. 3 is a perspective view of an essential part of a roller chain for driving according to the embodiment of the present invention and Fig. 4 is a plan view of the roller chain. This roller chain for driving is used to transmit output power of an engine in a motorcycle to a driving wheel for instance. The roller chain 1 is formed to have a necessary length by sequentially connecting inner links 2 and outer links 3. The inner link 2 consists of a pair of inner link plates (hereinafter, simply called "the inner plates") 4 and a bush 6 fitted into bush apertures 5 formed in the respective inner plates 4. On the other hand, the outer link 3 consists of a pair of outer link plates (hereinafter, simply called "the outer plates") 7 and a link pin 9 fitted into pin apertures 8 formed in the respective outer plates 7.

The inner plate 4 has a rectangular opening (hereinafter, called "the inner window") 10 located between the pair of bush apertures 5 as well as the bush apertures 5. Likewise, the outer plate 7 has a rectangular opening (hereinafter, called "the outer window") 11 located between the pair of pin apertures 8 as well as the pin apertures 8.

In assembly, the bush 6 is insertably fitted into the bush apertures 5 of the inner plates 4 to form the inner link 2. One end of the link pin 9 is insertably fitted into the pin aperture 8 of one of the outer plates 7. A tip of the link pin 9 insertably fitted into the outer plate 7 is next brought into contact with one side surface of the inner link 2 and the link pin 9 is loosely inserted into the bush 6. Then, the other end of the link pin 9 which passes through the bush 6 to project to the opposite side thereof is insertably fitted into the pin aperture 8 of the other outer plate 7. In this way, a set of roller chain 1 for driving is assembled.

Incidentally, the bush 6 is plastic-region press fitted into the bush aperture 5 by a predetermined interference. The link pin 9 is plastic-region press fitted into the pin hole 8 by a predetermined interference. The assembling order described above is one example among many and may be altered or modified.

A description is further made of the respective shapes of the inner plate 4 and outer plate 7.

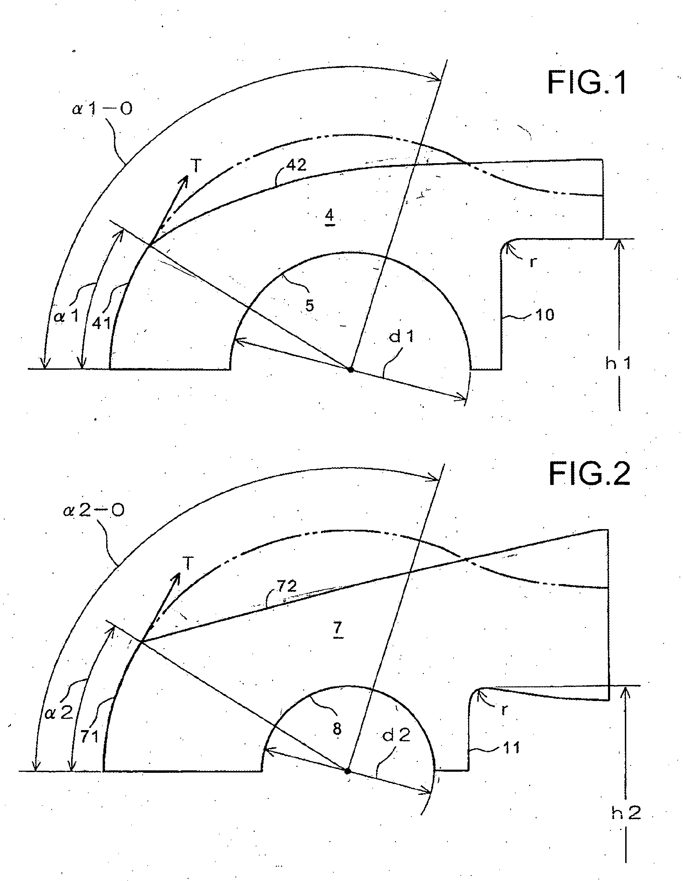

Fig. 1 is a front view of the inner plate 4 and Fig. 2 is a front view of the outer plate 7. In the figures both plates are illustrated with a 1/4 model. This is because each of the inner and outer plates 4 and 7 is symmetrical in any of its lengthwise and widthwise directions.

As seen from Fig. 1, the inner window 10 has a size h1 almost equal to the diameter d1 of the bush aperture 5, the size h1 extending in a direction (i.e., the widthwise direction) perpendicular to the lengthwise direction (a linear direction joining the bush apertures 5, 5) of the inner plate 4.

Likewise, in Fig. 2, the outer window 11 has a size h2 almost equal to the diameter d2 of the pin aperture 8, the size h2 extending in a direction (i.e., the widthwise direction) perpendicular to the lengthwise direction (a linear direction joining the pin apertures 8, 8) of the outer plate 7.

The inner plate 4 is formed such that a circular-arc angle α1 of a partial circle 41 forming each of its lengthwise ends is smaller than that of the conventional inner plate. Similarly, the outer plate 7 is formed such that a circular-arc angle α2 of a partial circle 71 forming each of its lengthwise ends is smaller than that of the conventional outer plate. For comparison, the external profile of each of the conventional inner and outer plates are shown with chained lines and also the end circular-arc angles of the conventional inner and outer plates are shown (with symbols α1-0 and α2-0, respectively). In other words, the inner and outer plates 4, 7 of the present embodiment are each formed to have the end partial circle smaller in area than that of the conventional one. On the other hand, the inner and outer plates 4, 7 of the present invention are each formed such that the widthwise external profile portion (side) 42, 72 is formed almost linearly so as to extend inwardly of the tangential direction T of the end partial circle.

It is to be noted that the side 42 of the inner plate 4 draws such a circle that has linearity more moderate than that of the side 72 of the outer plate 7. This is because if the inner plate 4 is formed to have the side 42 extending linearly from the end circular-arc portion, the distance between the edge of the bush aperture 5 and the side 42 becomes too short to transfer a sufficient load. The side 42 is slightly protruded outwardly to thereby provide sufficient load bearing. In order to make the side 42 linearly similarly to the side 72, the circular-arc angle α1 may be set at a value slightly greater than that of the circular-arc angle α2. In this way, the large distance between the edge of the bush aperture 5 and the side 42 can be ensured.

The inner window 10 and outer window 11 are not limited to a rectangle and may be shaped such that the lengthwise central portion of each of the outer and inner plates 7, 4 is slightly reduced in width as shown in Fig. 2. In addition, it is preferred that the corners of the inner window 10 and outer window 11 be rounded to avoid stress concentration.

As described above, the roller chain 1 for driving according to the present embodiment the inner and outer plates 4 and 7 are formed with the inner and outer windows 10 and 11, respectively. In addition, the end partial circles 41, 71 are reduced in area by making their associated circular-arc angles small. Therefore, the roller chain 1 for driving can significantly be reduced in weight than the conventional one. For example, the roller chain with Figs. 1 and 2 can achieve weight reduction of about 23%.

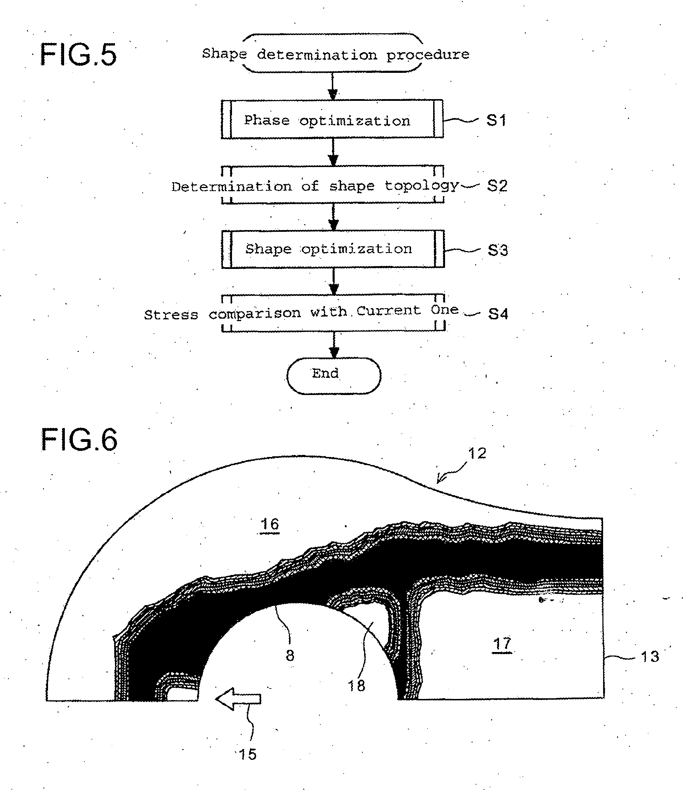

A description is next made of a procedure for determining the shapes of inner plate 4 and the outer plate 7 reduced in weight as described above. Fig. 5 is a flowchart of the shape determination procedure. This shape determination procedure includes phase optimization, shape optimization and stress comparison.

In step S1, phase optimization is performed by taking a design parameter as mesh density in the entire region of the 1/4 model of the outer plate, an object factor as rigidity maximization and a restrictive condition as 30%-reduction in weight.

The phase optimization is performed by a density method. In the density method, on the assumption that a longitudinal elastic modulus E of the material of the outer plate 7 is proportional to the N-th power of density ρ (E = ρNE0), the optimal phase is determined as a design parameter. Symbol E0 is a set longitudinal elastic modulus. The longitudinal elastic modulus E used in the calculation of the phase optimization is varied between 0.0 to E0 by varying the density ρ 0.0 to 1.0 of each mesh. In the optimization calculation, each mesh of the entire region of the model 12 is taken as a design parameter. In addition, for the purpose of realizing the maximization of the rigidity as the object factor by the design parameter while meeting the restrictive condition in which the weight is reduced by 30%, repeated computation is performed to determine an optimized solution. Existing finite element analysis software or finite element model creation programs for determining the optimum solution can be used.

Fig. 6 illustrates density mesh data for a roller chain model as a phase optimization object. The finite element model 12 is a 1/4 model of the outer plate used in the conventional roller chain. Analysis was performed by restraining the symmetrical boarders 13, 14 of the model 12 and applying a load P to the pin aperture 8 in a direction of arrow 15. Incidentally, the division mesh is omitted in the figure.

The contrasting pattern of Fig. 6 represents a density distribution as the optimum solution resulting from the phase optimization calculation. The portions having thicker patterns than the others are areas having larger density. The outer plate works through these areas to transmit a larger force. In other words, a judgment can made as below. For the outer plate of the roller chain, the higher-density portions are more important portions to transmit energy, whereas the lower-density portions are less important portions. In particular, blank areas 16, 17, 18 in the model 12 virtually have no importance for the outer plate of the roller chain and so may probably eliminated.

Shape topology is determined in step S2 in Fig. 5. In step S2 the desirable shape of the outer plate 7 is extracted based on the important and less important portions obtained by the phase optimization. Specifically, an analyzer judges the optimum shape that can share strain energy judgeable from the contrasting patterns of Fig. 6 and manually determines control points.

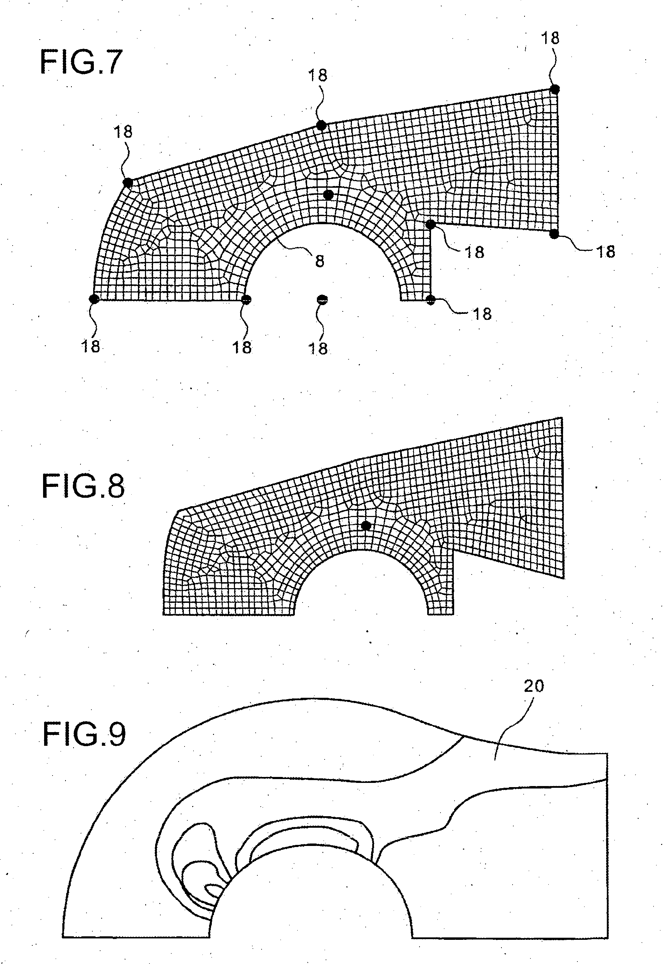

Fig. 7 illustrates shape topology determined. Reference numeral 18 denotes control points. Specifically, areas containing the higher-density portions shown in Fig. 6 are defined by the control points 18 serving as characteristic points, thereby determining the shape of the outer plate 7. The shape of the pin aperture 8 is defined by a radius.

After the shape topology is determined, shape optimization is performed in step S3. Since only the characteristic points of the outer plate 7 are determined, calculation is performed to give dimensions to them in step S3. This calculation is performed using the existing program for the shape optimization. The shape optimization takes an object factor as rigidity maximization, a design parameter as the movement amount of the control point, and a restrictive condition as 30%-reduction in weight. Fig. 8 illustrates mesh date resulting from the movement of the control points by the shape optimization.

In step S4 of Fig. 5, the outer plate 7 whose shape has been determined in steps S1 to S3 is compared in stress with the outer plate having the conventional shape by CAE. The evaluation of the stress was performed by calculating the Mises stress. The calculation of the Mises stress can be executed on the general-purpose structural analysis program. Incidentally, the evaluation of stress may be performed by other methods as well as by the calculation of the Mises stress.

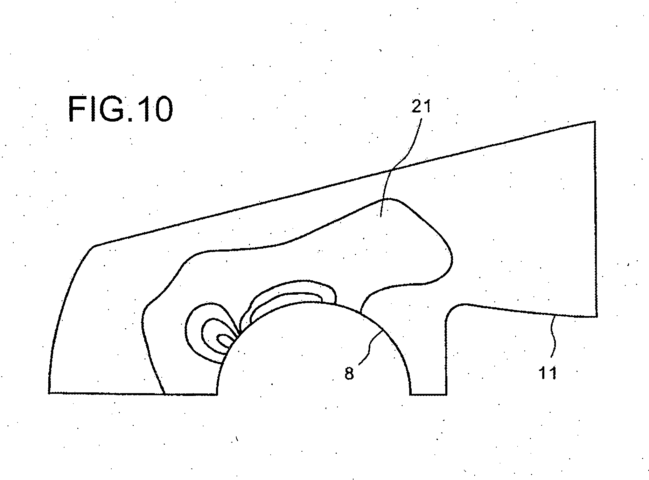

Fig. 9 is a diagram illustrating Mises stress of a conventional outer plate. Fig. 10 is a diagram illustrating Mises stress of the outer plate 7 determined according to the procedure of the present embodiment. In the figures, portions 20, 21 having large stress are each distributed in the vicinity of the pin aperture 8 and in areas excluding the outer window 11 of the outer plate 7. As seen from the above, the outer plate 7 of the present embodiment is formed such that portions subjected to small stress are removed and portions subjected to large stress are left in the conventional outer plate. In other words, the outer plate 7 of the present embodiment corresponds to the conventional one from which the waste portions are removed. In addition, weight minimization is achieved by the phase optimization and shape optimization method.

Along with the stress analysis by calculation, a tensile test was performed in which a load is applied to the pin aperture of the conventional outer plate in the longitudinal outer circumferential direction. Stress-strain diagrams were made for four points around the pin aperture. The results show that strain in the vicinity of the pin aperture and in the lengthwise direction of the outer plate along with increased stress is extremely small and such a portion is a waste area with respect to rigidity. This result corresponds to the distribution of the Mises stress described above.

The shape of the outer plate 7 is determined that is optimally reduced in weight by the phase optimization, shape optimization, stress comparison, tensile test and the like. The shape of the inner shape 4 can be determined by the same technique.

### Main Reference Numerals

- 1: roller chain for driving,
- 2: inner link,
- 3: outer link,
- 4: inner plate,
- 5: bush aperture,
- 6: bush,
- 7: outer plate,
- 8: pin aperture,
- 9: link pin,
- 10: inner window,
- 11: outer window,
- 12: finite element model,
- 13: symmetrical border,
- 42, 72: side.

## Claims

1. A roller chain (1) for driving comprising:
a plurality of outer link plates (7) and inner link plates (4);
each outer link plate (7) having a pair of link pin apertures (8) spaced in the lengthwise direction of the outer link plate (7);
each inner link plate (4) having a pair of bush apertures (5) spaced in the lengthwise direction of the inner link plate (4);
a bush (6) being fitted into each bush aperture (5) of the inner link plates (4), and
a link pin (9) being inserted into each bush (6) and fitted into a link pin aperture (8);
wherein the outer link plates (7) and the inner link plates (4) are interconnected by the bushes (6) and the link pins (9); and wherein
each outer link plate (7) has an outer window (11) formed between the pair of link pin apertures (8);
each inner link plate (4) has an inner window (10) formed between the pair of bush apertures (5); and
external profiles of the outer and inner link plates (7; 4) are each formed of circular arc portions (71; 41) at both lengthwise ends of said links, and sides (72; 42) each substantially linearly extending to a lengthwise center of said links from one end of a corresponding circular arc end portion (71; 41) thereof;
**characterized in that**
each of said sides (72; 42) of the link plates (7; 4) extends toward the outside in the widthwise direction of the corresponding link plate (7; 4), perpendicularly to the lengthwise direction thereof, such that the link plates (7; 4) expand widthwise from the circular arc end portions (71; 41) thereof to the corresponding lengthwise centers said sides (72; 42) of the link plates (7; 4) extending however inwardly relative to the end tangential directions (T) of the circular arc end portions (71; 41) of the link plates (7; 4); and **in that** the circular arc end portion (41) of the inner link has a circular-arc angle (α₁) greater than a circular-arc angle (α₁) of the circular arc end portion (δ₁) of the outer link,
such as to increase the distance between the edge of the bush apertures (5) and said sides (42) of the inner link plates (4).

2. The roller chain (1) for driving according to claim 1,
wherein an outer link plate widthwise size (h2) of the outer window (11) is almost the same as a diameter (d2) of the link pin aperture (8), and
an inner link plate widthwise size (h1) of the inner window (10) is the same as a diameter (d1) of bush aperture (5).

3. The roller chain (1) for driving according to claim 1 or 2, wherein the outer link plate (7) and the inner link plate (4) are each formed symmetrical in any of the longitudinal and widthwise directions.

4. The roller chain (1) for driving according to any one of claims 1 to 3, wherein the outer window (11) and the inner window (10) are each formed almost rectangular.

5. The roller chain (1) for driving according to claim 4, wherein the outer and inner windows (11, 10) are each rounded at corners thereof.

## Patentansprüche

1. Eine Rollenkette (1) zum Antrieb, die Folgendes umfasst:
eine Vielzahl von Außenlaschen (7) und Innenlaschen (4);
wobei jede Außenlasche (7) ein Paar in Längsrichtung der Außenlasche (7) voneinander beabstandete Gelenkstift-Öffnungen (8) aufweist;
wobei jede Innenlasche (4) ein Paar in Längsrichtung der Innenlasche (4) voneinander beabstandete Buchsen-Öffnungen (5) aufweist;
wobei eine Buchse (6) in jede Buchsen-Öffnung (5) der Innenlaschen (4) eingepasst wird, und
wobei ein Gelenkstift (9) in jede Buchse (6) eingesetzt wird und in eine Gelenkstift-Öffnung (8) eingepasst wird;
wobei die Außenlaschen (7) und die Innenlaschen (4) durch die Buchsen (6) und die Gelenkstifte (9) miteinander verbunden sind; und wobei
jede Außenlasche (7) ein Außenfenster (11) aufweist, das zwischen dem Paar Gelenkstift-Öffnungen (8) gebildet wird; wobei
jede Innenlasche (4) ein Innenfenster (10) aufweist, das zwischen dem Paar Buchsen-Öffnungen (5) gebildet wird; und wobei
äußere Profile der äußeren und inneren Laschen (7; 4) jeweils aus Kreisbogenabschnitte (71; 41) an beiden Enden in Längsrichtung der genannten Gelenke bestehen und aus Seiten (72; 42), die jeweils im Wesentlichen linear zu einem auf die Längsrichtung bezogenes Zentrum der genannten Gelenke hin verlaufen, ausgehend von einem Ende eines entsprechenden Kreisbogenabschnitts (71; 41) davon;
**dadurch gekennzeichnet, dass**
jede der genannten Seiten (72; 42) der Laschen (7; 4) hin zum Außenbereich in Richtung der Breite der entsprechenden Lasche (7, 4) senkrecht zur Längsrichtung davon verläuft, sodass sich die Laschen (7; 4) in Breitenrichtung ausgehend von den Kreisbogenabschnitten (71; 41) davon zu den entsprechenden auf die Längsrichtung bezogenen Zentren ausdehnen, wobei die genannten Seiten (72; 42) der Laschen (7; 4) jedoch in Bezug auf die End-Tangentialrichtungen (T) der Kreisbogenabschnitte (71; 41) der Laschen (7; 4) nach innen verlaufen, und dass
die Kreisbogen-Endabschnitte (41) der Innenlasche einen Kreisbogenwinkel (α1) aufweist, der größer ist als ein Kreisbogenwinkel (α2) des Kreisbogen-Endabschnitts (71) der Außenlasche, sodass der Abstand zwischen dem Rand der Buchsen-Öffnungen (5) und den genannten Seiten (42) der Innenlaschen (4) vergrößert wird.

2. Die Rollenkette (1) zum Antrieb nach Anspruch 1,
wobei eine Größe (h2) der Außenlasche in Richtung der Breite des Außenfensters (11) in etwa einem Durchmesser (d2) der Gelenkstift-Öffnung (8) entspricht, und
eine Größe (h1) der Innenlasche in Richtung der Breite des Innenfensters (10) einem Durchmesser (d1) der Buchsen-Öffnung (5) entspricht.

3. Die Rollenkette (1) zum Antrieb nach Anspruch 1 oder 2, wobei die Außenlasche (7) und die Innenlasche (4) bezüglich jeder der Längs- oder Breiten-Richtungen jeweils symmetrisch ausgebildet sind.

4. Die Rollenkette (1) zum Antrieb nach einem der Ansprüche von 1 bis 3, wobei das Außenfenster (11) und das Innenfenster (10) jeweils nahezu rechteckig ausgebildet werden.

5. Die Rollenkette (1) zum Antrieb nach Anspruch 4, wobei das Außen- und Innenfenster (11, 10) jeweils an ihren Ecken abgerundet werden.

## Revendications

1. Chaîne à rouleaux (1) pour entraînement comprenant :
une pluralité de plaques de chaîne extérieures (7) et de plaques de chaîne intérieures (4) ;
chaque plaque de chaîne extérieure (7) comportant une paire d'ouvertures d'axe de liaison (8) espacées dans le sens de la longueur de la plaque de chaîne extérieure (7) ;
chaque plaque de chaîne intérieure (4) comportant une paire d'ouvertures de douille (5) espacées dans le sens de la longueur de la plaque de chaîne intérieure (4) ;
une douille (6) étant ajustée dans chaque ouverture de douille (5) des plaques de chaîne intérieures (4), et
un axe de liaison (9) étant inséré dans chaque douille (6) et ajusté dans une ouverture d'axe de liaison (8) ;
dans lequel les plaques de chaîne extérieures (7) et les plaques de chaîne intérieures (4) sont interconnectées par les douilles (6) et les axes de liaison (9) ; et dans lequel
chaque plaque de chaîne extérieure (7) comporte une fenêtre extérieure (11) formée entre la paire d'ouvertures d'axe de liaison (8) ;
chaque plaque de chaîne intérieure (4) comporte une fenêtre intérieure (10) formée entre la paire d'ouvertures de douille (5) ; et
des profils extérieurs des plaques de chaîne (7; 4) extérieure et intérieure sont chacun formés de parties d'arc circulaires (71; 41) aux deux extrémités dans le sens de la longueur desdites plaques, et de côtés (72; 42) chacun s'étendant sensiblement linéairement vers un centre desdites plaques dans le sens de la longueur depuis une extrémité d'une partie d'extrémité en arc circulaire (71; 41) correspondante de ceux-ci ;
**caractérisé en ce que**
chacun desdits côtés (72; 42) des plaques de chaîne (7; 4) s'étend vers l'extérieur dans le sens de la largeur de la plaque de chaîne (7; 4) correspondante, perpendiculairement à un sens de la longueur de celle-ci, de telle manière que les plaques de chaîne (7; 4) s'étendent dans le sens de la largeur depuis les parties d'extrémité en arc circulaire (71; 41) de celles-ci vers les centres dans le sens de la longueur correspondants ; lesdits côtés (72; 42) des plaques de chaîne (7; 4) s'étendant néanmoins vers l'intérieur relativement aux directions tangentielles d'extrémité (T) des parties d'extrémité en arc circulaire (71; 41) des plaques de chaîne (7; 4) ; et **en ce que**
la partie d'extrémité en arc circulaire (41) de la plaque intérieure a un angle d'arc circulaire (α1) plus grand qu'un angle d'arc circulaire (α2) de la partie d'extrémité en arc circulaire (71) du lien extérieur, de façon à augmenter la distance entre le bord des ouvertures de douille (5) et lesdits bords (42) des plaques de chaîne intérieures (4).

2. Chaîne à rouleaux (1) pour entrainement selon la revendication 1,
dans laquelle une taille dans le sens de la largeur (h2) de la fenêtre extérieure (11) de plaque de chaîne extérieure est environ la même qu'un diamètre (d2) de l'ouverture d'axe de liaison (8), et
une taille dans le sens de la largeur (h1) de la fenêtre intérieure (10) de plaque de chaîne intérieure est la même qu'un diamètre (d1) d'ouverture de douille (5)

3. Chaîne à rouleaux (1) pour entrainement selon la revendication 1 ou 2, dans laquelle la plaque de chaîne extérieure (7) et la plaque de chaîne intérieure (4) sont toutes deux formées symétriquement dans les deux sens de la longueur et de la largeur.

4. Chaîne à rouleaux (1) pour entrainement selon l'une quelconque des revendications 1 à 3, dans laquelle la fenêtre extérieure (11) et la fenêtre intérieure (10) sont toutes deux de forme à peu près rectangulaire.

5. Chaîne à rouleaux (1) pour entrainement selon la revendication 4, dans laquelle les fenêtres extérieure et intérieure (11, 10) sont chacune arrondies au niveau de leurs coins.
